# EUROPEAN PATENT APPLICATION

(11) **EP 2 988 226 A1**
(43) Date of publication of application: **24.02.2016**
(21) Application number: 13882111.1
(22) Date of filing: 25.10.2013
(51) Int. Cl.: G06F 17/24

(54) **ELECTRONIC DOCUMENT DATA UPDATING METHOD AND DEVICE**

(30) Priority: 19.04.2013 CN 201310139547
(71) Applicant: Xiaomi Inc., Beijing 100085 (CN)
(72) Inventor: ZHANG, Lei, Beijing 100085 (CN); WANG, Xiaolei, Beijing 100085 (CN); QIU, Ruiheng, Beijing 100085 (CN); WANG, Dong, Beijing 100085 (CN); WANG, Yi, Beijing 100085 (CN)
(74) Representative: Underwood, Nicolas Patrick
(86) International application number: PCT/CN2013/085980
(87) International publication number: WO 2014/169611

(57) **Abstract**

Disclosed are an electronic document data updating method and device for improving the accuracy of the updated data, the method comprising: acquiring data update information of the electronic document and user recorded information; determining whether the data update information of the electronic document exists before the end position in the position information of the user recorded information; when data update information of the electronic document exists, adjusting the position information in the user recorded information according to the data update information of the electronic document; and updating the data of the electronic document according to the data update information of the electronic document and the adjusted user recorded information. Also disclosed is a device for realizing the method.

## Description

### TECHNICAL FIELD

The present disclosure relates to the field of computer and communication technology and, more particularly, to a method and a device for updating data in an electronic document.

### BACKGROUND

Nowadays, with the rapid advancement of science and technology, especially with the rapid development of the Internet technology, people's reading habits are no longer limited to only read traditional paper publications, more and more people select electronic reading. Electronic reading has become very popular, and the proportion of the electronic reading increases gradually. Due to the portability of electronic reading terminals (electronic books, mobile phones and the like), people may read electronic documents in fragments of time of daily life, for example when taking a bus or a subway, even for a few minutes when standing in line to buy a ticket.

Digital content publications have many advantages compared with the traditional paper publications. The paper publications have problems such as being subjected to long cycle and high costs for revision after publication. With respect to this, the digital content publications are advantageous in its natural, i.e., the digital content publications can be revised with short cycle and low cost since they are "dematerialized" entity and can be propagated conveniently.

Meanwhile, digital content publications have great advantages in the aspect of deep reading. Electronic reading terminals often provide value-added services such as recording the positions having been read by a user last time, making a bookmark, making a book excerpt and the like, so as to provide experiences of deep reading beyond the paper publications.

After an electronic publication is read by a user and a user record information is recorded, when performing one or more updates (revision) to the electronic publication, the typical method is to directly apply the original user's data content to the updated electronic publication. However, since the electronic publication has been changed at this time, it is likely to cause some problems, for example, the reading position is misplaced, the bookmark position is misplaced, the book excerpt position and content are error, and the like. The user record information includes information recorded with respect to the user's last reading position, the bookmarks, the book excerpts and the like.

### SUMMARY

The embodiments of the present disclosure provide a method and a device for updating data in an electronic document, which are used to improve the accuracy of the updated data.

In one aspect, the present disclosure provides a method for updating data in an electronic document, which includes:
obtaining a data update information and a user record information of an electronic document;
judging whether there is the data update information of the electronic document ahead of an end position in a position information in the user record information;
adjusting the position information in the user record information according to the data update information of the electronic document when there is the data update information of the electronic document; and
updating the data in the electronic document according to the data update information and the adjusted user record information.

In the present embodiment, the user record information is adjusted according to the data update information, so that the user record information synchronizes with the updated data, which could improve data accuracy, and thus improve the user experience.

Preferably, the position information in the user record information includes a start position and the end position; and
adjusting the position information in the user record information according to the data update information of the electronic document when there is the data update information of the electronic document includes:
if the start position in the data update information of the electronic document is ahead of a start position in the user record information, and an end position in the data update information of the electronic document is ahead of the end position in the user record information, adjusting the start position and the end position in the user record information according to the data update information of the electronic document; and
if the start position in the data update information of the electronic document is behind the start position in the user record information, and the start position in the data update information of the electronic document is ahead of the end position in the user record information, adjusting the end position in the user record information according to the data update information of the electronic document.

In the present embodiment, the position information in the user record information is diversely adjusted according to a position relationship between the position information in the data update information of the electronic document and the position information in the user record information, so that the user record information synchronizes with the updated data, which could improve data accuracy, and thus improve user experience.

Preferably, the data update information of the electronic document includes an operation type; and
if the operation type is Insert, the start position and the end position in the data update information of the electronic document are identical with each other.

In the present embodiment, a detailed method for adjusting the position information in the user record information is provided for the Insert operation.

Preferably, the data update information of the electronic document includes an operation type;
if the operation type is Delete, and the end position in the data update information of the electronic document is ahead of the start position in the user record information, adjusting the start position and the end position in the user record information according to the data update information of the electronic document includes: sequentially adjusting the start position and the end position in the user record information;
if the operation type is Delete, the start position in the data update information of the electronic document is ahead of the start position in the user record information, and the end position in the data update information of the electronic document is between the start position and end position in the user record information, adjusting the start position and the end position in the user record information according to the data update information of the electronic document includes: using the end position in the data update information of the electronic document as the adjusted start position in the user record information, and sequentially adjusting the end position in the user record information according to a data length in the data update information of the electronic document;
if the operation type is Delete, the start position in the data update information of the electronic document is behind the start position in the user record information, and the end position in the data update information of the electronic document is ahead of the end position in the user record information, adjusting the end position in the user record information according to the data update information of the electronic document includes: sequentially adjusting the end position in the user record information according to the data length in the data update information of the electronic document;
if the operation type is Delete, the start position in the data update information of the electronic document is between the start position and the end position in the user record information, and the end position in the data update information of the electronic document is behind the end position in the user record information, adjusting the end position in the user record information according to the data update information of the electronic document includes: using the start position in the data update information of the electronic document as the adjusted end position in the user record information; and
if the operation type is Delete, the start position in the data update information of the electronic document is ahead of the start position in the user record information, and the end position in the data update information of the electronic document is behind the end position in the user record information, the method further includes deleting the user record information.

In the present embodiment, a detailed method for updating the user record information is provided for the Delete operation.

Preferably, the data update information of the electronic document includes an operation type;
if the operation type is Move, and the start position and the end position before updating and the start position and the end position after updating in the data update information of the electronic document are all ahead of the start position in the user record information, or the start position and the end position before updating and the start position and the end position after updating in the data update information of the electronic document are all behind the start position in the user record information, the method further includes keeping the start position and the end position in the user record information unchanged; and
if the operation type is Move, the start position and the end position before updating in the data update information of the electronic document is ahead of the start position in the user record information, and the start position and the end position after updating are behind the end position in the user record information, or the start position and the end position before updating in the data update information of the electronic document are behind the end position in the user record information, and the start position and the end position after updating is ahead of the start position in the user record information, adjusting the start position and the end position in the user record information according to the data update information of the electronic document includes: sequentially adjusting the start position and the end position in the user record information according to a data length in the data update information of the electronic document.

In the present embodiment, a detailed method for updating the position information in the user record information is provided for the Move operation.

In another aspect, the present disclosure provides a device for updating data in an electronic document, which includes:
an obtaining module configured to obtain a data update information and a user record information of an electronic document;
a judging module configured to judge whether there is the data update information of the electronic document ahead of an end position in a position information in the user record information;
an adjusting module configured to adjust the position information in the user record information according to the data update information of the electronic document when there is the data update information of the electronic document; and
an updating module configured to update the data in the electronic document according to the data update information and the adjusted user record information.

Preferably, the position information in the user record information includes a start position and the end position;
if a start position in the data update information of the electronic document is ahead of the start position in the user record information, and an end position in the data update information of the electronic document is ahead of the end position in the user record information, the adjusting module adjusts the start position and the end position in the user record information according to the data update information of the electronic document; and
if the start position in the data update information of the electronic document is behind the start position in the user record information, and the start position in the data update information of the electronic document is ahead of the end position in the user record information, the adjusting module adjusts the end position in the user record information according to the data update information of the electronic document.

Preferably, the data update information of the electronic document includes an operation type; and
if the operation type is Insert, the start position and the end position in the data update information of the electronic document are identical with each other.

Preferably, the data update information of the electronic document includes an operation type;
if the operation type is Delete, and the end position in the data update information of the electronic document is ahead of the start position in the user record information, the adjusting module sequentially adjusts the start position and the end position in the user record information;
if the operation type is Delete, the start position in the data update information of the electronic document is ahead of the start position in the user record information, and the end position in the data update information of the electronic document is between the start position and end position in the user record information, the adjusting module uses the end position in the data update information of the electronic document as the adjusted start position in the user record information, and sequentially adjusts the end position in the user record information according to a data length in the data update information of the electronic document;
if the operation type is Delete, the start position in the data update information of the electronic document is behind the start position in the user record information, and the end position in the data update information of the electronic document is ahead of the end position in the user record information, the adjusting module sequentially adjusts the end position in the user record information according to the data length in the data update information of the electronic document;
if the operation type is Delete, the start position in the data update information of the electronic document is between the start position and the end position in the user record information, and the end position in the data update information of the electronic document is behind the end position in the user record information, the adjusting module uses the start position in the data update information of the electronic document as the adjusted end position in the user record information; and
if the operation type is Delete, the start position in the data update information of the electronic document is ahead of the start position in the user record information, and the end position in the data update information of the electronic document is behind the end position in the user record information, the adjusting module deletes the user record information.

Preferably, the data update information of the electronic document includes an operation type;
if the operation type is Move, and the start position and the end position before updating and the start position and the end position after updating in the data update information of the electronic document are all ahead of the start position in the user record information, or the start position and the end position before updating and the start position and the end position after updating in the data update information of the electronic document are all behind the start position in the user record information, the adjusting module keeps the start position and the end position in the user record information unchanged; and
if the operation type is Move, the start position and the end position before updating in the data update information of the electronic document is ahead of the start position in the user record information, and the start position and the end position after updating are behind the end position in the user record information, or the start position and the end position before updating in the data update information of the electronic document are behind the end position in the user record information, and the start position and the end position after updating is ahead of the start position in the user record information, the adjusting module sequentially adjusts the start position and the end position in the user record information according to a data length in the data update information of the electronic document.

It should be understood that the above general description and the following detailed description are only exemplary, but not to limit the present disclosure.

The above and other features and advantages of the present disclosure will be described in the following description and partially become more apparent therefrom or be understood by implementing the present disclosure. The features and other advantages of the present disclosure may be implemented and obtained by the structures prescribed in the written description, claims and the accompanying drawings.

Hereinafter, the technical solutions of the present disclosure will be further described in detail by referring to the accompanying drawings and embodiments.

### BRIEF DESCRIPTION OF THE DRAWINGS

The accompanying drawings are used to provide a further understanding of the present disclosure, constitute a part of the description, and illustrate the present disclosure together with embodiments of the present disclosure without restricting the present disclosure, in which:
Fig. 1 is an illustrative flow chart showing a main method for updating data in an electronic document according to an embodiment of the present disclosure;
Fig. 2 is a schematic diagram showing a structure of a Patch document according to an embodiment of the present disclosure;
Fig. 3 is an illustrative flow chart showing a method for updating data with respect to Insert operation according to an embodiment of the present disclosure;
Fig. 4 is an illustrative flow chart showing a method for updating data with respect to Delete operation according to an embodiment of the present disclosure;
Fig. 5 is a schematic diagram showing a paragraph in an article according to an embodiment of the present disclosure;
Fig. 6 is a schematic diagram showing a paragraph in an article with some words deleted according to an embodiment of the present disclosure;
Fig. 7 is a schematic diagram showing a paragraph in an article with some words deleted according to the method described in the background;
Fig. 8 an illustrative flow chart showing a method for updating data with respect to Insert operation according to an embodiment of the present disclosure; and
Fig. 9 is an illustrative structural diagram showing a device for updating data in an electronic document according to an embodiment of the present disclosure.

### DETAILED DESCRIPTION

The preferred embodiments of the present disclosure will be described in detail in conjunction with the accompanying drawings. It should be understood that the preferred embodiments described herein are only used to illustrate and explain the present disclosure, but not intended to restrict the present disclosure.

In the present embodiment, a user record information is adjusted according to a data update information, so that the user record information synchronizes with the updated data, which could improve data accuracy, and thus improve the user experience.

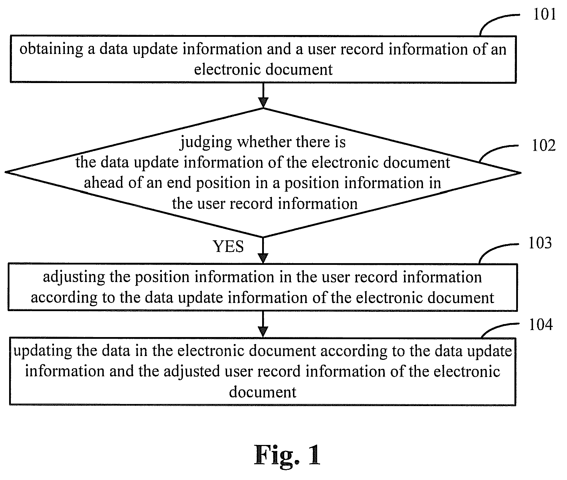

Referring to Fig. 1, in the present embodiment, a flow of a main method for updating data in an electronic document is as follows:
step 101: obtaining a data update information and a user record information of an electronic document;
step 102: judging whether there is the data update information of the electronic document ahead of an end position in a position information in the user record information;
step 103: adjusting the position information in the user record information according to the data update information of the electronic document if there is the data update information of the electronic document; and
step 104: updating the data in the electronic document according to the data update information and the adjusted user record information.

In the present embodiment, the electronic document includes content data in forms of epub, pdf, txt, or the like which are broadcasted and published via network. When an electronic document is published, an original version number is assigned to the electronic document. When the electronic document due to revisions, supplements, or the like is updated, firstly a new version number is assigned to the electronic document, and then a comparison is performed with a general-purpose comparison tool based on binary data so as to record differences at the binary level. This record shall include operation modes and operation numbers. The document for recording all the differences is referred to as a Patch document. In addition, the Patch document shall also record the original version number and the updated version number corresponding to this update.

In detail, the Patch document is to record the revised contents between the two designated versions of the electronic document, and includes a version number before revision, a version number after revision, the revision operation, the revision contents, and the like.

Every time when updating an electronic document, the updated version shall include all the Patch documents of the versions before updating and a Patch document of current update, both of them being updated to the electronic reading terminal.

At the electronic reading terminal, the user record information such as a user's reading position, a bookmark, a book excerpt or the like, as well as relative physical positions used in the electronic document are recorded, wherein the relative physical positions used in the electronic document is, for example, the last reading position which uses a physical position of the data displayed finally when the user closed the document last time, and a book excerpt which uses a physical position of the data of the recorded book excerpt. The user record information may also include the version number and the like of the current electronic document.

The relative physical position in the electronic publication refers to a value of a physical offset (i.e., an offset at the binary level) in the electronic document, which is usually irrelevant to algorithms or software at the client terminal.

After receiving a message for updating an electronic document, the electronic reading terminal firstly needs to find one or more Patches to be executed among the attached one or more Patches according to a version tag before updating and a version tag after updating, and then sequentially execute each Patch in an order from old version to new one based on the version numbers. When executing each Patch, all of the recorded user record information needs to be traversed. A new physical address in the electronic document after applying the Patch is calculated according to the information of the Patch document, and the user record information is then updated.

Preferably, with respect to each user record information, the data update information which is relevant to the position information of this user record information is obtained from all Patch documents, the user record information is adjusted according to the obtained data update information, and the data in the electronic document is updated according to the data update information of the electronic document and the adjusted user record information.

Preferably, the position information in the user record information includes a start position and an end position. The data update information of the electronic document includes an operation type which includes Insert, Delete and Move operations between chapters and the like.

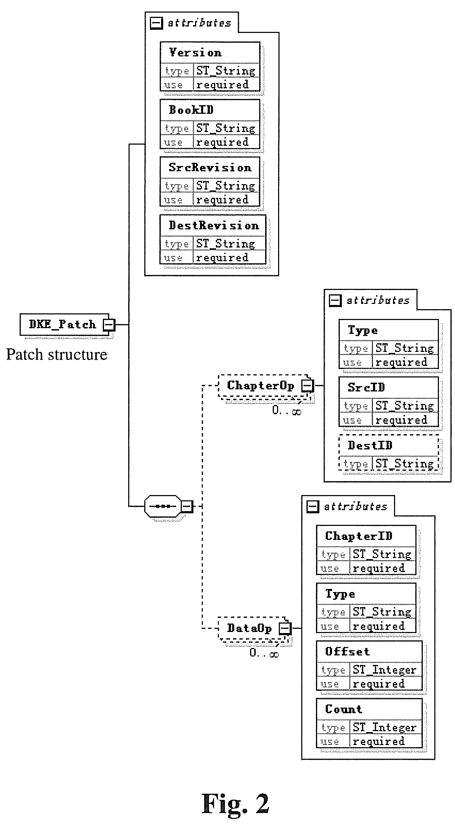

A Patch document with respect to an electronic document in a basic format of epub document described by using the Extensible Markup Language (XML) is defined as Fig. 2. The introductions to respective structures in Fig. 2 are shown in Table 1:

**Table 1**

| Name | Type | Note |
|---|---|---|
| Version | ST_String (character) | Version number of Patch document, current value is 1.0. |
| BookID | ST_String | Unique identification of content document associated with Patch. |
| SrcRevision | ST_String | Version number of document before applying Patch. |
| DestRevision | ST_String | Version number of document after applying Patch. |
| ChapterOp | | Revision operation at chapter level. |
| DataOp | | Revision operation to data in chapters. |

The ChapterOp sequence records all revision operations relating to the chapter level, and the attributes of which are defined as Table 2:

**Table 2**

| Name | Type | Note |
|---|---|---|
| Type | ST_String | Operator type, with optional values of Insert, Delete and Move, which are described in detail as below: |
| | | Insert - inserting chapter designated by SrcID to the rear end of the chapter designated by DestID, and if no DestID attribute appears, it represents that the newly added chapter appears at the location of the first chapter. |
| | | Delete - deleting the chapter designated by SrcID. |
| | | Move -moving the chapter designated by SrcID to the rear end of the chapter designated by DesID, and if no DestID attribute appears, it represents that the chapter designated by SrcID is moved to the position of the first chapter. |
| SrcID | ST_String | Operation parameter. |
| DestID | ST_String | (Optional) operation parameter. |

DataOp sequence records data revision operations within one chapter, and the attributes of which are defined as Table 3:

**Table 3**

| Name | Type | Note |
|---|---|---|
| ChapterID | ST_String | ID of the destination chapter. |
| Type | ST_String | Operator type, with optional values of Insert and Delete, which are described in detail as below: |
| | | Insert - inserting data of Count bytes at Offset position. Delete - deleting data of Count bytes from Offset position. |
| Offset | ST_Integer(value) | Operation parameter. |
| Count | ST_Integer | Operation parameter. |

In step 103, preferably, if the start position in the data update information of the electronic document is ahead of the start position in the user record information, and the end position in the data update information of the electronic document is ahead of the end position in the user record information, adjusting the start position and the end position in the user record information according to the data update information of the electronic document; or, if the start position in the data update information of the electronic document is behind the start position in the user record information, and the start position in the data update information of the electronic document is ahead of the end position in the user record information, adjusting the end position in the user record information according to the data update information of the electronic document.

Hereinafter, the update processes with respect to different operations will be introduced in detail respectively.

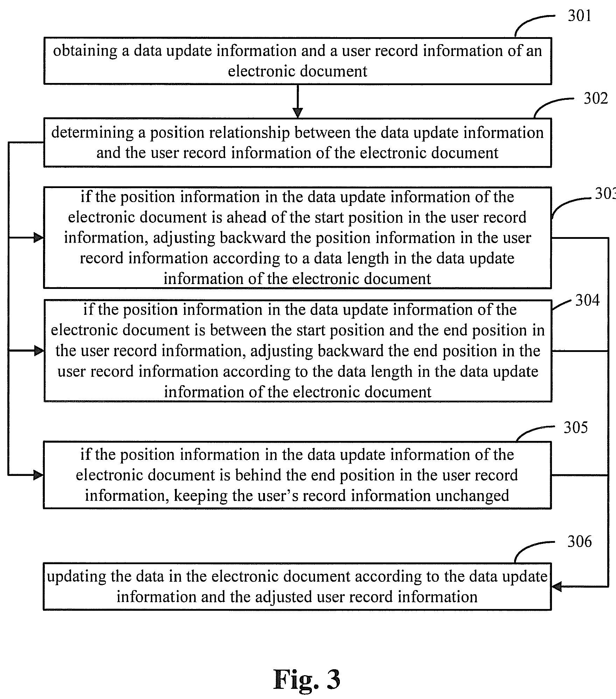

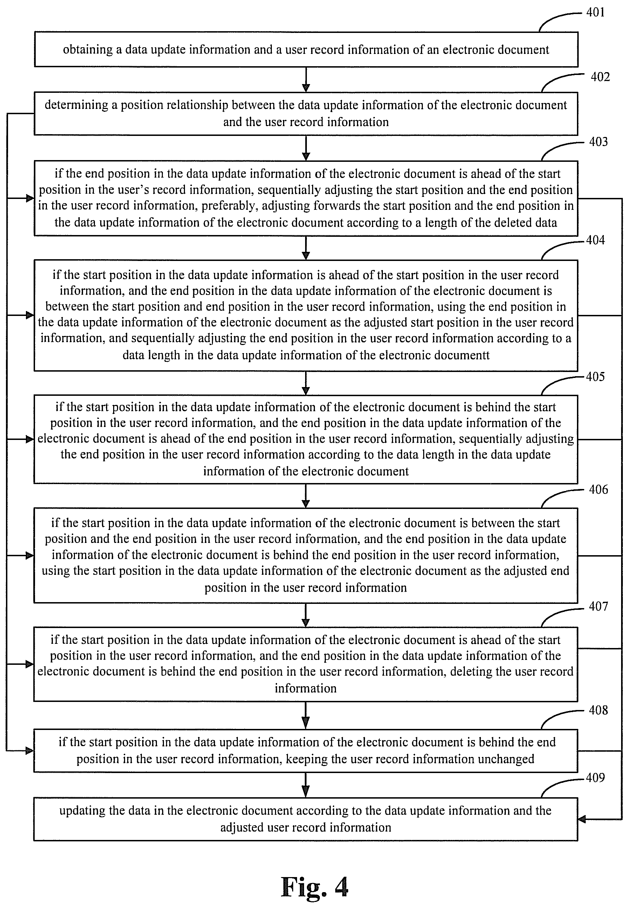

Referring to Fig. 3, in the present embodiment, the flow of the method for updating data with respect to Insert operation is as follows:
step 301: obtaining a data update information and a user record information of an electronic document;
step 302: determining a position relationship between the data update information and the user record information of the electronic document, and then proceeding to step 303, step 304 or step 305;
step 303: if a position information in the data update information of the electronic document is ahead of a start position in the user record information, adjusting backward the position information in the user record information according to a data length in the data update information of the electronic document, and then proceeding to step 306, wherein the start position and the end position in the data update information of the electronic document are identical with each other, i.e., the position information in the data update information of the electronic document, the position information in the user record information includes the start position and the end position, and if the user record information is a record information for a single position such as a bookmark, the start position and the end position in the user record information are identical with each other;
step 304: if the position information in the data update information of the electronic document is between the start position and the end position in the user record information, adjusting backward the end position in the user record information according to the data length in the data update information of the electronic document, which step is mainly suitable for the case that the user record information is a record information for multiple positions such as a book excerpt, but is not suitable for the case that the user record information is a record information for a single position such as a bookmark, and then proceeding to step 306;
step 305: if the position information in the data update information of the electronic document is behind the end position in the user record information, keeping the user record information unchanged, and then proceeding to step 306; and
step 306: updating the data in the electronic document according to the data update information of the electronic document and the adjusted user record information.
Referring to Fig. 4, in the present embodiment, the flow of the method for updating data with respect to Delete operation is as follows:
step 401: obtaining a data update information and a user record information of an electronic document;
step 402: determining a position relationship between the data update information and the user record information of the electronic document, and then proceeding to one step among step 403 to step 408;
step 403: if an end position in the data update information of the electronic document is ahead of a start position in the user record information, adjusting sequentially the start position and an end position in the user record information; preferably, adjusting forwards the start position and the end position in the data update information of the electronic document according to a length of the deleted data, and proceeding to step 409, wherein if the user record information is a record information for a single position such as a bookmark, the start position and the end position in the user record information are identical with each other;
step 404: if the start position in the data update information of the electronic document is ahead of the start position in the user record information, and the end position in the data update information of the electronic document is between the start position and the end position in the user record information, using the end position in the data update information of the electronic document as the adjusted start position in the user record information, and adjusting sequentially the end position in the user record information according to a data length in the data update information of the electronic document, which step is mainly suitable for the case that the user record information is a multi-position tag such as a book excerpt, but is not suitable for the case that the user record information is a record information for a single position such as a bookmark, and then proceeding to step 409;
step 405: if the start position in the data update information of the electronic document is behind the start position in the user record information, and the end position in the data update information of the electronic document is ahead of the end position in the user record information, adjusting sequentially the end position in the user record information according to the data length in the data update information of the electronic document, namely, adjusting forwards the end position in the user record information according to the data length in the data update information of the electronic document, which step is mainly suitable for the case that the user record information is a multi-position tag such as a book excerpt, but is not suitable for the case that the user record information is a record information for a single position such as a bookmark, and then proceeding to step 409;
step 406: if the start position in the data update information of the electronic document is between the start position and the end position in the user record information, and the end position in the data update information of the electronic document is behind the end position in the user record information, using the start position in the data update information of the electronic document as the adjusted end position in the user record information, which step is mainly suitable for the case that the user record information is a multi-position tag such as a book excerpt, but is not suitable for the case that the user record information is a record information for a single position such as a bookmark, then proceeding to step 409;
step 407: if the start position in the data update information of the electronic document is ahead of the start position in the user record information, and the end position in the data update information of the electronic document is behind the end position in the user record information, deleting the user record information, and then proceeding to step 409;
step 408: if the start position in the data update information of the electronic document is behind the end position in the user record information, keeping the user record information unchanged, and then proceeding to step 409; and
step 409: updating the data in the electronic document according to the data update information of the electronic document and the adjusted user record information.

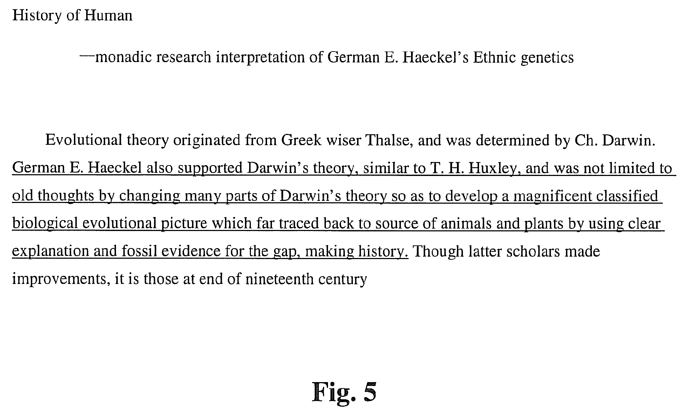

Taking the condition of deleting some sentences from a position of a book excerpt as an example, in the chapter "History of Human" in "The Complete Works of Lu Xun", the user adds a book excerpt marked by an underline as shown in Fig. 5 from a certain physical position Start to a physical position End. The physical position Start is the physical position of the word "German" at a start position of the underline shown in Fig. 5, and the physical position End is the physical position of the symbol "∘" at an end position of the underline shown in Fig. 5.

When updating data in the book of "The Complete Works of Lu Xun", the literary context of "T. H. Huxley," is deleted from the chapter of "History of Human". When updating the data, the related Patch document records the deleting from a physical position of "similar" (which is DeleteStart) to a physical position of above "," (which is DeleteEnd) in the above chapter.

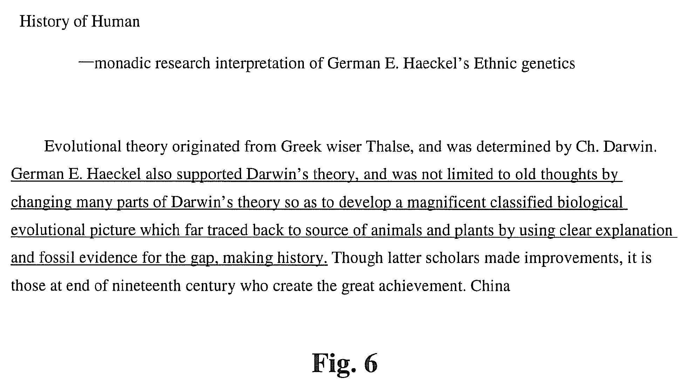

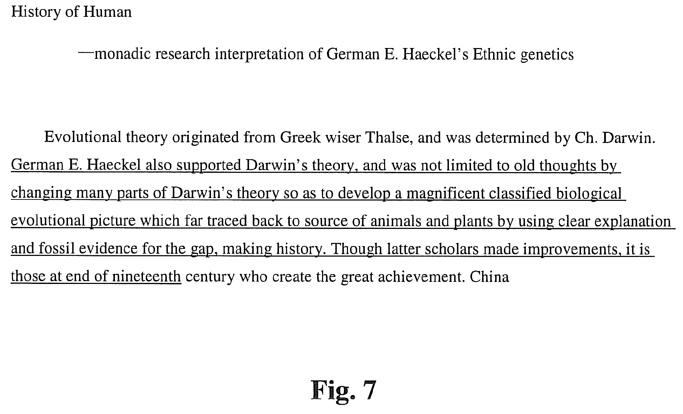

when updating the data, the electronic reading terminal calculates and amends the end position End of the above book excerpt marked by the underline to be the result of (DeleteEnd-DeleteStart). The position of the amended book excerpt after updating is displayed as in Fig. 6. If the original user record information were directly applied to the new electronic document, it would have an effect as shown in Fig. 7, in this case, the updated data of which would be apparently inaccurate.

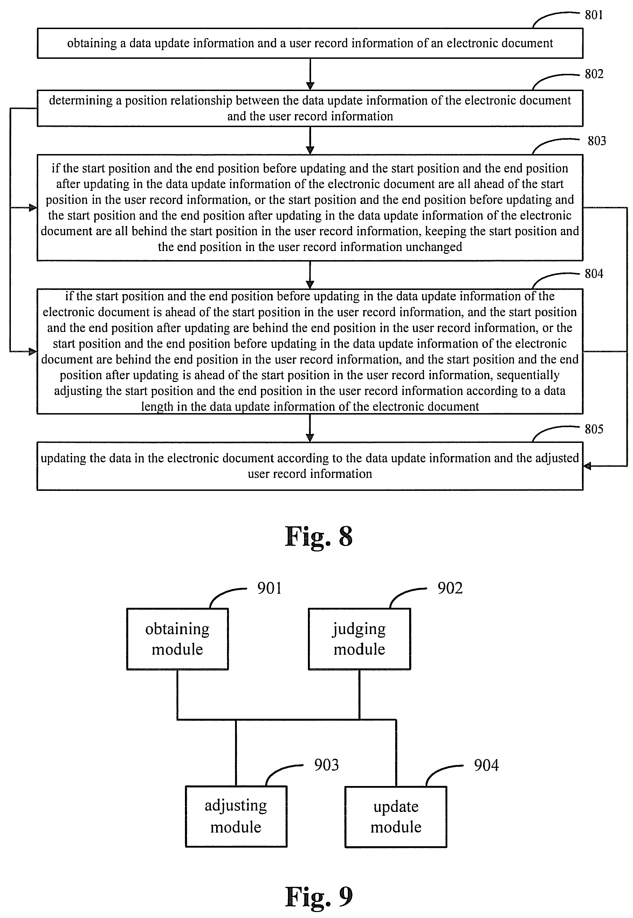

Referring to Fig. 8, in the present embodiment, the flow of the method for updating data with respect to Insert operation is as follows:
step 801: obtaining a data update information and a user record information of an electronic document;
step 802: determining a position relationship between the data update information and the user record information of the electronic document, and then proceeding to step 803 or step 804;
step 803: if the start position and the end position before updating and the start position and the end position after updating in the data update information of the electronic document are all ahead of the start position in the user record information, or the start position and the end position before updating and the start position and the end position after updating in the data update information of the electronic document are all behind the start position in the user record information, keeping the start position and the end position in the user record information unchanged, and then proceeding to step 805, wherein if the user record information is a record information for a single position such as a bookmark, the start position and the end position in the user record information are identical with each other;
   as for Move operation, which corresponds to Delete operation and Insert operation, usually the whole chapter is to be moved, therefore the start position and the end position before updating as well as the start position and the end position after updating of Move operation would not fall between the start position and the end position in the user record information;
step 804: if the start position and the end position before updating in the data update information of the electronic document is ahead of the start position in the user record information, the start position and the end position after updating are behind the end position in the user record information, or the start position and the end position before updating in the data update information of the electronic document are behind the end position in the user record information, and the start position and the end position after updating is ahead of the start position in the user record information, sequentially adjusting the start position and the end position in the user record information according to a data length in the data update information of the electronic document, and then proceeding to step 805; and
step 805: updating the data in the electronic document according to the data update information and the adjusted user record information.

The implementation procedure for updating data can be known from the above description, and the procedure may be implemented by a device. The inner structure and functions of the device will be introduced as below.

Referring to Fig. 9, in the present embodiment, the device for updating data in the electronic document includes an obtaining module 901, a judging module 902, an adjusting module 903 and an update module 904. The device for updating data in the electronic document may be implemented by an electronic reading terminal or the like.

The obtaining module 901 is configured to obtain a data update information and a user record information of an electronic document.

The judging module 902 is configured to judge whether there is the data update information of the electronic document ahead of an end position in a position information in the user record information.

The adjusting module 903 is configured to adjust the position information in the user record information according to the data update information of the electronic document when there is the data update information of the electronic document.

The update module 904 is configured to update the data in the electronic document according to the data update information and the adjusted user record information.

In the present embodiment, the position information in the user record information includes a start position and an end position.

Preferably, if the start position in the data update information of the electronic document is ahead of the start position in the user record information, and the end position in the data update information of the electronic document is ahead of the end position in the user record information, the adjusting module 903 adjusts the start position and the end position in the user record information according to the data update information of the electronic document.

Preferably, if the start position in the data update information of the electronic document is between the start position and the end position in the user record information, and the start position in the data update information of the electronic document is ahead of the end position in the user record information, the adjusting module 903 adjusts the end position in the user record information according to the data update information of the electronic document.

In the present embodiment, the data update information of the electronic document includes an operation type, and the operation type includes Insert, Delete and Move.

When the operation type is Insert, the start position and the end position in the data update information of the electronic document are identical with each other.

If the operation type is Delete, and the end position in the data update information of the electronic document is ahead of the start position in the user record information, the adjusting module 903 sequentially adjusts the start position and the end position in the user record information.

If the operation type is Delete, the start position in the data update information of the electronic document is ahead of the start position in the user record information, and the end position in the data update information of the electronic document is between the start position and end position in the user record information, the adjusting module 903 uses the end position in the data update information of the electronic document as the adjusted start position in the user record information, and sequentially adjusts the end position in the user record information according to a data length in the data update information of the electronic document.

If the operation type is Delete, the start position in the data update information of the electronic document is between the start position and the end position in the user record information, and the end position in the data update information of the electronic document is ahead of the end position in the user record information, the adjusting module 903 sequentially adjusts the end position in the user record information according to the data length in the data update information of the electronic document.

If the operation type is Delete, the start position in the data update information of the electronic document is between the start position and the end position in the user record information, and the end position in the data update information of the electronic document is behind the end position in the user record information, the adjusting module 903 uses the start position in the data update information of the electronic document as the adjusted end position in the user record information.

If the operation type is Delete, the start position in the data update information of the electronic document is ahead of the start position in the user record information, and the end position in the data update information of the electronic document is behind the end position in the user record information, the adjusting module 903 deletes the user record information.

If the operation type is Move, and the start position and the end position before updating and the start position and the end position after updating in the data update information of the electronic document are all ahead of the start position in the user record information, or the start position and the end position before updating and the start position and the end position after updating in the data update information of the electronic document are all behind the start position in the user record information, the adjusting module 903 keeps the start position and the end position in the user record information unchanged.

If the operation type is Move, the start position and the end position before updating in the data update information of the electronic document is ahead of the start position in the user record information, and the start position and the end position after updating are behind the end position in the user record information, or the start position and the end position before updating in the data update information of the electronic document are behind the end position in the user record information, and the start position and the end position after updating is ahead of the start position in the user record information, the adjusting module 903 sequentially adjusts the start position and the end position in the user record information according to a data length in the data update information of the electronic document.

After updating the data in the electronic document, no matter adding contents, deleting contents or revising contents, even with many times of updating, the accuracy of the positions and contents of the existed user's data at the electronic reading terminal, such as a reading schedule, a bookmark, a book excerpt and the like, can be guaranteed to the maximum extent, which provides a better user experience.

Those skilled in the art should understand that the embodiments of the present disclosure may be provided as methods, systems, or computer program products. In this way, the present disclosure may adopt forms of embodiments only using hardware, embodiments only using software or embodiments using software and hardware. Moreover, the present disclosure may be in form of computer program products to be carried on one or more computer usable storage media including computer usable program codes (including but not being restricted by disc memory, optical memory and the like) therein.

The present disclosure is described by referring to the flow charts and/or block diagrams of the method, device (system), and computer program products according to the embodiments of the present disclosure. It should be understood that each flow and/or block in the flow charts and/or block diagrams, as well as the combinations of the flow and/or block in the flow charts and/or block diagrams may be implemented by the computer program instructions. The computer program instructions may be provided to a general computer, a dedicated computer, an embedded processor or processors of other programmable data process devices so as to produce a machine, such that the instructions executed by the computers or the processors of other programmable data process devices can produce a device for achieving the functions prescribed by one or more flow in the flow charts and/or one or more blocks in the block diagrams.

Additionally, these computer program instructions may be stored in a computer readable memory being able to guide the computer or other programmable data process devices to work in a specific way, so that the instructions stored in the computer readable memory produce a manufactured product including an instructing device for achieving the functions prescribed by one or more flow in the flow charts and/or one or more blocks in the block diagrams.

Also, these computer program instructions may be loaded in a computer or other programmable data process devices, such that the computer or other programmable devices may execute a series of operation steps to produce processes achieved by the computer, thereby the instructions executed on the computers or other programmable devices can produce steps for achieving the functions prescribed by one or more flow in the flow charts and/or one or more blocks in the block diagrams.

It will be apparent that those skilled in the art may make various variations and modifications to the present disclosure without departing from the spirit or scope of the invention. If these variations and modifications of the present disclosure are within the scope of the claims in the present disclosure and their equivalent technology, the present disclosure are intended to cover these variations and modifications.

## Claims

1. A method for updating data in an electronic document, **characterized in that** the method comprises:
obtaining a data update information and a user record information of an electronic document;
judging whether there is the data update information of the electronic document ahead of an end position in a position information in the user record information;
adjusting the position information in the user record information according to the data update information of the electronic document when there is the data update information of the electronic document; and
updating the data in the electronic document according to the data update information and the adjusted user record information.

2. The method for updating data in the electronic document according to claim 1, **characterized in that** the position information in the user record information comprises a start position and the end position;
adjusting the position information in the user record information according to the data update information of the electronic document when there is the data update information of the electronic document comprises:
if a start position in the data update information of the electronic document is ahead of the start position in the user record information, and an end position in the data update information of the electronic document is ahead of the end position in the user record information, adjusting the start position and the end position in the user record information according to the data update information of the electronic document; and
if the start position in the data update information of the electronic document is behind the start position in the user record information, and the start position in the data update information of the electronic document is ahead of the end position in the user record information, adjusting the end position in the user record information according to the data update information of the electronic document.

3. The method for updating data in the electronic document according to claim 2, **characterized in that** the data update information of the electronic document comprises an operation type; and
if the operation type is Insert, the start position and the end position in the data update information of the electronic document are identical with each other.

4. The method for updating data in the electronic document according to claim 2, **characterized in that** the data update information of the electronic document comprises an operation type;
if the operation type is Delete, and the end position in the data update information of the electronic document is ahead of the start position in the user record information, adjusting the start position and the end position in the user record information according to the data update information of the electronic document comprises: sequentially adjusting the start position and the end position in the user record information;
if the operation type is Delete, the start position in the data update information of the electronic document is ahead of the start position in the user record information, and the end position in the data update information of the electronic document is between the start position and the end position in the user record information, adjusting the start position and the end position in the user record information according to the data update information of the electronic document comprises: using the end position in the data update information of the electronic document as the adjusted start position in the user record information, and sequentially adjusting the end position in the user record information according to a data length in the data update information of the electronic document;
if the operation type is Delete, the start position in the data update information of the electronic document is behind the start position in the user record information, and the end position in the data update information of the electronic document is ahead of the end position in the user record information, adjusting the end position in the user record information according to the data update information of the electronic document comprises: sequentially adjusting the end position in the user record information according to the data length in the data update information of the electronic document;
if the operation type is Delete, the start position in the data update information of the electronic document is between the start position and the end position in the user record information, and the end position in the data update information of the electronic document is behind the end position in the user record information, adjusting the end position in the user record information according to the data update information of the electronic document comprises: using the start position in the data update information of the electronic document as the adjusted end position in the user record information; and
if the operation type is Delete, the start position in the data update information of the electronic document is ahead of the start position in the user record information, and the end position in the data update information of the electronic document is behind the end position in the user record information, the method further comprises deleting the user record information.

5. The method for updating data in the electronic document according to claim 2, **characterized in that** the data update information of the electronic document comprises an operation type;
if the operation type is Move, and the start position and the end position before updating and the start position and the end position after updating in the data update information of the electronic document are all ahead of the start position in the user record information, or the start position and the end position before updating and the start position and the end position after updating in the data update information of the electronic document are all behind the start position in the user record information, the method further comprises: keeping the start position and the end position in the user record information unchanged; and
if the operation type is Move, the start position and the end position before updating in the data update information of the electronic document is ahead of the start position in the user record information, and the start position and the end position after updating in the data update information of the electronic document are behind the end position in the user record information, or the start position and the end position before updating in the data update information of the electronic document are behind the end position in the user record information, and the start position and the end position after updating in the data update information of the electronic document is ahead of the start position in the user record information, adjusting the start position and the end position in the user record information according to the data update information of the electronic document comprises: sequentially adjusting the start position and the end position in the user record information according to a data length in the data update information of the electronic document.

6. The method for updating data in the electronic document according to claim 1, **characterized in that** the obtaining the data update information of the electronic document comprises: obtaining all versions of the data update information of the electronic document;
adjusting the position information in the user record information according to the data update information of the electronic document when there is the data update information of the electronic document comprises: when there is the data update information of the electronic document, adjusting the position information in the user record information according to an order of the versions of the electronic document and the data update information corresponding to respective versions.

7. A device for updating data in an electronic document, **characterized in that** the device comprises:
an obtaining module configured to obtain a data update information and a user record information of an electronic document;
a judging module configured to judge whether there is the data update information of the electronic document ahead of an end position in a position information in the user record information;
an adjusting module configured to adjust the position information in the user record information according to the data update information of the electronic document when there is the data update information of the electronic document; and
an updating module configured to update the data in the electronic document according to the data update information and the adjusted user record information.

8. The device for updating data in the electronic document according to claim 7, **characterized in that** the position information in the user record information comprises a start position and an end position;
if a start position in the data update information of the electronic document is ahead of the start position in the user record information, and an end position in the data update information of the electronic document is ahead of the end position in the user record information, the adjusting module adjusts the start position and the end position in the user record information according to the data update information of the electronic document; and
if the start position in the data update information of the electronic document is behind the start position in the user record information, and the start position in the data update information of the electronic document is ahead of the end position in the user record information, the adjusting module adjusts the end position in the user record information according to the data update information of the electronic document.

9. The device for updating data in the electronic document according to claim 8, **characterized in that** the data update information of the electronic document comprises an operation type; and
if the operation type is Insert, the start position and the end position in the data update information of the electronic document are identical with each other.

10. The device for updating data in the electronic document according to claim 8, **characterized in that** the data update information of the electronic document comprises an operation type;
if the operation type is Delete, and the end position in the data update information of the electronic document is ahead of the start position in the user record information, the adjusting module sequentially adjusts the start position and the end position in the user record information;
if the operation type is Delete, the start position in the data update information of the electronic document is ahead of the start position in the user record information, and the end position in the data update information of the electronic document is between the start position and end position in the user record information, the adjusting module uses the end position in the data update information of the electronic document as the adjusted start position in the user record information, and sequentially adjusts the end position in the user record information according to a data length in the data update information of the electronic document;
if the operation type is Delete, the start position in the data update information of the electronic document is behind the start position in the user record information, and the end position in the data update information of the electronic document is ahead of the end position in the user record information, the adjusting module sequentially adjusts the end position in the user record information according to the data length in the data update information of the electronic document;
if the operation type is Delete, the start position in the data update information of the electronic document is between the start position and the end position in the user record information, and the end position in the data update information of the electronic document is behind the end position in the user record information, the adjusting module uses the start position in the data update information of the electronic document as the adjusted end position in the user record information; and
if the operation type is Delete, the start position in the data update information of the electronic document is ahead of the start position in the user record information, and the end position in the data update information of the electronic document is behind the end position in the user record information, the adjusting module deletes the user record information.

11. The device for updating data in the electronic document according to claim 8, **characterized in that** the data update information of the electronic document comprises an operation type;
if the operation type is Move, and the start position and the end position before updating and the start position and the end position after updating in the data update information of the electronic document are all ahead of the start position in the user record information, or the start position and the end position before updating and the start position and the end position after updating in the data update information of the electronic document are all behind the start position in the user record information, the adjusting module keeps the start position and the end position in the user record information unchanged; and
if the operation type is Move, the start position and the end position before updating in the data update information of the electronic document is ahead of the start position in the user record information, the start position and the end position after updating are behind the end position in the user record information, or the start position and the end position before updating in the data update information of the electronic document are behind the end position in the user record information, and the start position and the end position after updating is ahead of the start position in the user record information, the adjusting module sequentially adjusts the start position and the end position in the user record information according to a data length in the data update information of the electronic document.

12. The device for updating data in the electronic document according to claim 7, **characterized in that** the obtaining module obtains all versions of the data update information of the electronic document; and
if there is the data update information of the electronic document, the adjusting module adjusts the position information in the user record information according to an order of the versions of the electronic document and the data update information corresponding to respective versions.
